# EUROPÄISCHE PATENTSCHRIFT

(11) **EP 2 134 766 B1**
(45) Veröffentlichungstag und Bekanntmachung des Hinweises auf die Patenterteilung: **24.11.2010**
(21) Anmeldenummer: 08734739.9
(22) Anmeldetag: 22.03.2008
(51) Int. Cl.: C08G 63/695, C08G 64/08, C08G 64/14

(54) **MODIFIZIERTE POLYCARBONATE, POLYESTERCARBONATE MIT VERBESSERTEM DEHNVERHALTEN UND FLAMMWIDRIGKEIT**
MODIFIED POLYCARBONATES, POLYESTER CARBONATES HAVING IMPROVED STRAIN BEHAVIOR AND FLAME RESISTANCE
POLYCARBONATES, CARBONATES DE POLYESTER MODIFIÉS POSSÉDANT UN COMPORTEMENT DE DILATATION ET DE RÉSISTANCE À LA FLAMME AMÉLIORÉS

(30) Priorität: 03.04.2007 DE 102007015948
(43) Veröffentlichungstag der Anmeldung: 23.12.2009
(73) Patentinhaber: Bayer MaterialScience AG, 51368 Leverkusen (DE)
(72) Erfinder: EBERT, Wolfgang, 47800 Krefeld (DE); KARBACH, Alexander, 47800 Krefeld (DE); MEYER, Alexander, 40489 Düsseldorf (DE)
(86) Internationale Anmeldenummer: PCT/EP2008/002327
(87) Internationale Veröffentlichungsnummer: WO 2008/119485

(56) Entgegenhaltungen:
- WO-A-2007/020211
- WO-A-2007/080053
- US-A- 5 130 460
- US-A- 5 155 250
- US-A- 5 210 247

## Beschreibung

Die vorliegende Erfindung betrifft die Verwendung von phenolischen Verbindungen mit Alkylsiloxan-Substituenten als Kettenabbrecher in Polycarbonaten, Polyestercarbonaten und Polyestern sowie Polycarbonate, Polyestercarbonate und Polyester mit Alkylsiloxan-substituierten Phenolen abgeleiteten Endgruppen, Formkörper und Extrudate aus diesen Polymeren, Verfahren zur Herstellung der Polymere sowie Verfahren zur Herstellung der Formkörper und Extrudate.

Polycarbonate, Polyestercarbonaten und Polyestern, die mit den Alkylsiloxan-substituierten Phenolen modifiziert sind, weisen im Vergleich zu herkömmlichen Polycarbonaten ein verbessertes Dehnverhalten und eine höhere Flammwidrigkeit auf.

Zur Herstellung herkömmlicher Polycarbonate werden häufig monofunktionelle Verbindungen auf Phenolbasis wie z. B. Phenol, 4-Alkylphenole und 4-Cumylphenol als Kettenabbrecher eingesetzt (Kunststoff-Handbuch 3; L. Bottenbruch, Hanser, München 1992, S. 127; EP-A 0 353 594).

Lineare alkylsubstituierte und verzweigte alkylsubstituierte Endgruppen sind ebenfalls bekannt und z. B. in US-A 42 69 964 beschrieben. Polycarbonate mit Alkylaminoendgruppen sind in US-A 30 85 992 beschrieben.

Der Einbau von verzweigten Siloxan-haltigen Kettenabbrechern in Polycarbonat ist in EP-A 0 412 407 beschrieben. Diese Endgruppen sind jedoch verzweigt. Das Ziel der EP-A 0 412 407 war die Bereitstellung von verhakungsarmen Polymeren mit verbessertem Fließverhalten und verbesserter Kerbschlagzähigkeit. Die vorliegende Anmeldung beschreibt Phenole mit linearen Substituenten als Kettenabbrecher.

Silyl-terminierte hydrolyselabile Polycarbonate sind in JP-A 2002-241483 beschrieben. Diese Polycarbonate werden als Material für eine photosensitive Schicht von elektrophotographischen Photorezeptoren verwendet. Die in dieser Referenz beschriebenen Polycarbonate sind im Gegensatz zu den hier beschriebenen Polycarbonaten leicht hydrolysierbar.

In JP-A 07 224 219 werden Siloxan-modifizierte Polycarbonate mit besserer Verschleißfestigkeit beschrieben. Diese unterscheiden sich von den hier beschriebenen Polycarbonaten, die in ihrem Dehnverhalten und ihrer Flammwidrigkeit verbessert sind.

In DE-A 3500807 werden flammbeständige Polycarbonatharz-Zusammensetzungen beschrieben. Im Gegensatz zu den in DE-A 3500807 beschriebenen Siloxanverbindungen dienen die hier beschriebenen Siloxanderivate als Kettenabbrecher bei der Synthese von Polycarbonat. Dadurch werden die Siloxanverbindungen direkt an die Polymerkette geknüpft.

In EP-A 479107 werden Silanester-terminierte Polycarbonate beschrieben. Die hier beschriebenen Polycarbonate sind strukturell anders aufgebaut. Auf das Brandverhalten wird in EP-A 479107 nicht eingegangen.

In WO 2006/134045 werden ebenfalls Polycarbonate mit endständigen Siloxanverbindungen beschrieben. Im Gegensatz zu der hier beschriebenen Methode werden die Siloxanverbindungen über aktivierte Carbonatgruppen in das Polycarbonat eingebaut. Dieser Schritt ist sehr aufwendig, da zur Synthese des modifizierten Polycarbonats ein entsprechend OH-terminierte Polycarbonatblock zur Verfügung gestellt werden muss. Die industrielle Synthese von Polycarbonat erfolgt entweder über das Phasengrenzflächenverfahren oder das Schmelzeumesterungsverfahren. Die Verbindungen, welche in WO 2006/134045 beschrieben sind, eignen sich nicht für das Phasengrenzflächenverfahren und nur sehr bedingt für das Schmelzeumesterungsverfahren. Dagegen sind die hier beschriebenen Kettenabbrecher sehr gut für das Phasengrenzflächenverfahren geeignet.

Ferner führt die Herstellmethode, welche in WO 2006/134045 offenbart ist, zu aromatisch-aliphatischen Oligo- oder Polycarbonaten. Die Verknüpfung von aromatischen und aliphatischen Resten über eine Carbonatbrücke führt zu Materialien, die gegenüber ausschließlich aromatischen Oligo- bzw. Polycarbonaten deutlich thermolabiler sind. Demgegenüber werden bei Einsatz der hier beschriebenen erfindungsgemäßen phenolischen Kettenabbrechern nur aromatische Polycarbonate gebildet.

Siloxanhaltige Blockcopolycarbonate zeichnen sich durch ihre mechanischen Eigenschaften ihre Witterungsstabilität und guten Flammschutzeigenschaften aus. Diese Materialien sind z. B. in EP-A 500131, US-A 5530083 und US-A 5502134 beschrieben. Zur Synthese dieser Materialien ist ein hoher Aufwand erforderlich. So muss der Hydroxyaryl terminierte Siloxanblock für die Synthese des Copolymeren bereitgestellt werden. Der Einbau des Blockes in die Polycarbonatkette muss gesteuert werden. Bei der Synthese dieses Copolymeren erhält man häufig trübe transluzente Materialien. Demgegenüber ist beim Einbau der erfindungsgemäßen Polycarbonate keine oder nur unwesentliche Prozessanpassung verglichen mit der herkömmlichen Polycarbonatsynthese nötig. Der Einbau dieser erfindungsgemäßen Kettenabbrecher führt je nach Kettenlänge zu transparenten Materialien.

Ausgehend vom Stand der Technik stellte sich somit die Aufgabe, Polycarbonate, Polyestercarbonate und Polyester mit Endgruppen, bzw. geeignete phenolische Verbindungen zur Erzeugung dieser Endgruppen, zu Verfügung zu stellen, welche sich leicht in Polycarbonate einbauen lassen und zu Materialien mit verbessertem Dehnverhalten und gleichzeitig hoher Flammwidrigkeit führen. Außerdem ist es wünschenswert, dass diese Endgruppen zu keinem nennenswerten Abbau unter thermischer Belastung wie z. B. im Extrusionsprozess oder im Spritzguss, aber auch im Herstellungsprozess bspw. nach dem Schmelzumesterungsverfahren, führen.

Überraschenderweise wurde nun gefunden, dass diese Aufgabe durch den Einsatz von phenolischen Kettenabbrechern, die über eine Etherbrücke mit einem Alkylsiloxan-Substituenten verknüpft sind, gelöst wird. Diese Kettenabbrecher bzw. die daraus entstehenden Endgruppen im Polycarbonat führen zu den gewünschten Eigenschaften einer verbesserten Flammwidrigkeit kombiniert mit verbessertem Dehnverhalten.

Gegenstand der vorliegenden Erfindung sind Polycarbonate, Polyestercarbonate und Polyester, die Endgruppen auf Basis von Alkylsiloxan-substituierten Phenolen enthalten, die Verwendung solcher Polycarbonate und die Verwendung phenolischer Verbindungen als Kettenabbrecher bei der Herstellung von Polymeren, insbesondere Polycarbonate, Polyestercarbonate und Polyester.

Gegenstand der Erfindung sind daher Polycarbonate, Polyestercarbonate und Polyester enthaltend eine phenolische Struktur der Formel (1) als Endgruppe 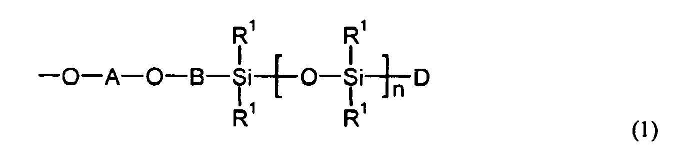 wobei
- A: für einen gegebenenfalls substituierten Arylrest steht, bevorzugt für 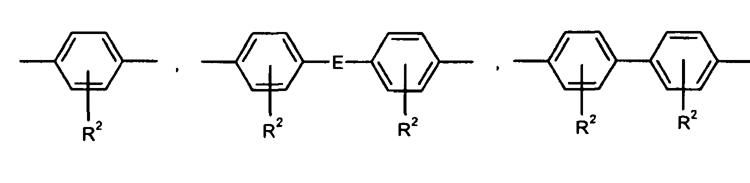 steht,
worin
- R²: für Wasserstoff, C₁-C₁₈-Alkyl, C₁-C₁₈-Alkoxy, Cl, Br oder für einen gegebenenfalls substituierten Aryl- oder Aralkylrest wie Phenyl oder Benzyl, besonders bevorzugt für Wasserstoff oder C₁-C₁₂ Alkyl, ganz besonders bevorzugt für Wasserstoff oder C₁-C₈ Alkyl wie Methyl oder Ethyl und insbesondere für Wasserstoff steht,
- E: für ein zweiwertiges organisches Radikal, bevorzugt für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromati- schen Ringen kondensiert sein kann, steht,
besonders bevorzugt für eine Einfachbindung, C₁ bis C₁-Alkylen, C₂ bis C₅-Alkyliden, C₅ bis C₆-Cycloalkyliden, -O-, -SO-, -CO-, -S- oder -SO₂-,
oder ein für einen Rest der Formel (la) oder (lb) 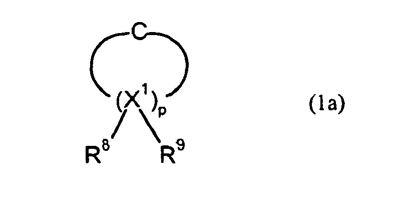 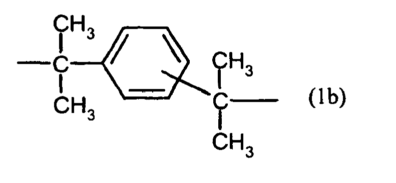
steht, wobei
- R⁸ und R⁹: für jedes X¹ individuell wählbar, unabhängig voneinander Wasserstoff oder C₁ bis C₆-Alkyl, vorzugsweise Wasserstoff, Methyl oder Ethyl bedeuten und
- X¹: Kohlenstoff und
- p: eine ganze Zahl von 4 bis 7, bevorzugt 4 oder 5 bedeuten, mit der Maßgabe, dass an mindestens einem Atom X¹, R⁸ und R⁹ gleichzeitig Alkyl sind.
- B: für C₁-C₁₂-Alkyl, C₁-C₁₂-Alkoxyalkyl, bevorzugt für C₁-C₆-Alkyl, C₁-C₆-Alkyloxy-C₁-C₆- alkyl beispielsweise und bevorzugt für Ethyl, Propyl, Butyl, Propyloxypropyl, Butyloxy- propyl, Propyloxyethyl, Ethyloxyethyl oder Ethyloxyproyl steht, besonders bevorzugt für Ethyl, Propyl und Butyl steht
- R¹: für C₁-C₁₂-Alkyl oder C₆-C₁₂-Aryl, bevorzugt Methyl oder Phenyl steht und insbesondere bevorzugt für Methyl steht.
- D: für C₁-C₁₂-Alkyl- oder C₆-C₁₂-Aryl, bevorzugt C₁-C₆-Alkyl, insbesondere Methyl, Ethyl, n- oder iso-Propyl steht und,
- n: für eine Zahl von 0 - 300, bevorzugt 0 - 200 und insbesondere bevorzugt 10 - 100 als Mittelwert einer Verteilung.

Der Baustein O-A-O ist bevorzugt abgeleitet von Diphenolen wie z. B. von Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen. Besonders bevorzugte Bausteine O-A-O sind abgeleitet von Hydrochinon, 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Insbesondere ist der Baustein O-A-O abgeleitet von Hydrochinon, 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1, 1 -Bis-(4-hydroxyphenyl)-cyclohexan und 1,1-Bis-(4-hydroxyphenyl)-3,3,5-trimethylcyclohexan (Bisphenol TMC); ganz besonders sind Hydrochinon, Bisphenol A und Bisphenol TMC als abgeleitete Bausteine bevorzugt.

Diese und weitere geeignete Diphenole sind z. B. in den US-A 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben.

In den phenolischen Verbindungen der Formel (2), 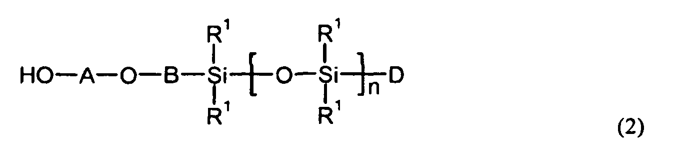 haben die Reste die oben für Formel (1) angegebene Definition.

Die Verwendung der Verbindungen der Formel (2) als Kettenabbrecher zur Herstellung von Polycarbonaten, Polyestercarbonaten oder Polyestern ist ebenfalls Gegenstand der vorliegenden Anmeldung.

Die oben aufgeführten allgemeinen oder in Vorzugsbereichen aufgeführten Restedefinitionen bzw. Erläuterungen können jedoch auch untereinander, also zwischen den jeweiligen Bereichen und Vorzugsbereichen beliebig kombiniert werden. Sie gelten für die Endprodukte sowie für die Vor- und Zwischenprodukte entsprechend.

Die Menge an einzusetzenden phenolischen Verbindungen der Formel (2) als Kettenabbrecher beträgt 0,5 bis 8 Mol-%, bevorzugt 2 bis 6 Mol-%, bezogen auf Mole an jeweils eingesetztem Diphenol bzw. Diphenolen.

Außer den phenolischen Verbindungen der Formel (2) können noch andere Phenole in Mengen bis zu 90 Mol-%, vorzugsweise bis 75 Mol-%, insbesondere bis 70 Mol-%, bezogen auf die jeweilige Gesamtmenge an Kettenabbrecher zur Herstellung der Polycarbonate, Polyestercarbonate und Polyester mitverwendet werden. Dabei kann es sich z.B. um Phenol oder Alkylphenole, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern handeln.

Gegenstand der vorliegenden Erfindung ist somit auch die Verwendung der phenolischen Verbindungen der Formel (2) gegebenenfalls in Kombination mit anderen Phenolen als Kettenabbrecher zur Herstellung von aromatischen Polycarbonaten, aromatischen Polyestercarbonaten und aromatischen Polyestern, wobei die anderen Phenole in Mengen bis zu 90 Mol-%, vorzugsweise bis 75 Mol-%, insbesondere bis 70 Mol-%, bezogen auf die jeweilige Gesamtmolmenge an Kettenabbrecher eingesetzt werden.

Die erfindungsgemäßen Verbindungen sind prinzipiell nach bekannten Methoden der organischen Chemie herstellbar.

Beispielweise lassen sich die Alkylsiloxan-modifizierten Phenole aus verfügbaren Hydroxy-substituierten Siloxanverbindungen und aromatischen Hydroxyverbindungen nach allgemein bekanntem Verfahren herstellen. Die Herstellmethode selbst kann z.B. eine Ethersynthese sein. Verfahren zur Herstellung von Alkylsiloxan-modifizierten Phenolen sind z. B. in WO 2006/134045 beschrieben.

Gemäß DE-A 2 119 799 erfolgt die Herstellung von Polycarbonaten unter Beteiligung phenolischer Endgruppen, nach dem Phasengrenzflächenverfahren wie auch dem Verfahren in homogener Phase.

Zur Herstellung von Polycarbonaten nach dem Phasengrenzflächenverfahren sei beispielhaft auf H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 verwiesen.

Daneben ist die Herstellung der erfindungsgemäßen Polycarbonate auch aus Diarylcarbonaten und Diphenolen nach dem bekannten Polycarbonatverfahren in der Schmelze, dem sogenannten Schmelzumesterungsverfahren, möglich, das z. B. in WO-A 01/05866 und WO-A 01/05867 beschrieben ist. Daneben werden Umesterungsverfahren (Acetatverfahren und Phenylesterverfahren) beispielsweise in den US-A 34 94 885, 43 86 186, 46 61 580, 46 80 371 und 46 80 372, in den EP-A 26 120, 26 121, 26 684, 28 030, 39 845, 91 602, 97 970, 79 075, 14 68 87, 15 61 03, 23 49 13 und 24 03 01 sowie in den DE-A 14 95 626 und 22 32 977 beschrieben. Auch in diesen Verfahren ist die erfindungsgemäße Verwendung der Siloxan-haltigen Kettenabbrecher möglich. Da diese Substanzen einen höheren Siedepunkt als Phenol bzw. die Phenole aus denen das Diarylcarbonat erhalten wurde aufweisen, bauen diese Substanzen als Kettenabbrecher in das jeweilige Polycarbonat ein.

Diarylcarbonate sind solche Kohlensäurediester der Formel (3) 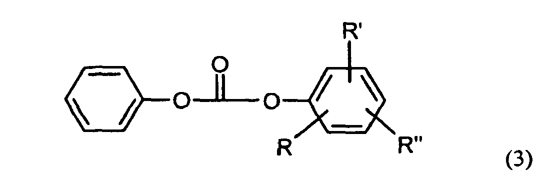 und Formel (4), 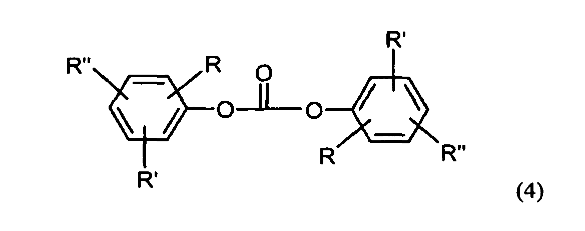 wobei R, R' und R" unabhängig voneinander H, gegebenenfalls verzweigte C₁-C₃₄-Alkyl/Cycloalkyl, C₇-C₃₄-Alkaryl oder C₆-C₃₄-Aryl bzw. C₆-C₃₄-Aryl-oxy darstellen können, beispielsweise Diphenylcarbonat, Butylphenyl-phenylcarbonat, Di-butylphenylcarbonat, Isobutylphenyl-phenylcarbonat, Di-isobutylphenylcarbonat, tert-Butylphenyl-phenylcarbonat, Di-tert-butylphenylcarbonat, n-Pentylphenyl-phenylcarbonat, Di-(n-pentylphenyl)carbonat, n-Hexylphenyl-phenylcarbonat, Di-(n-hexylphenyl)carbonat, Cyclohexylphenyl-phenylcarbonat, Di-cyclohexylphenylcarbonat, Phenylphenol-phenylcarbonat, Di-phenylphenolcarbonat, Isooctylphenyl-phenylcarbonat, Diisooctylphenylcarbonat, n-Nonylphenyl-phenylcarbonat, Di-(n-nonylphenyl)carbonat, Cumylphenyl-phenylcarbonat, Di-cumylphenylcarbonat, Naphthylphenyl-phenylcarbonat, Di-naphthylphenylcarbonat, Di-tert-butylphenyl-phenylcarbonat, Di-(di-tert-butylphenyl)carbonat, Dicumylphenyl-phenylcarbonat, Di-(dicumylphenyl)carbonat, 4-Phenoxyphenyl-phenylcarbonat, Di-(4-phenoxyphenyl)carbonat, 3-Pentadecylphenyl-phenylcarbonat, Di-(3-pentadecylphenyl)carbonat, Tritylphenyl-phenylcarbonat, Di-tritylphenylcarbonat, bevorzugt Diphenylcarbonat, tert-Butylphenyl-phenylcarbonat, Di-tert-butylphenylcarbonat, Phenylphenol-phenylcarbonat, Di-phenylphenolcarbonat, Cumylphenyl-phenylcarbonat, Di-cumylphenylcarbonat, besonders bevorzugt Diphenylcarbonat.

Für die Herstellung von Polycarbonaten sind geeignete Diphenole solche der Formel (5)

HO-Z-OH (5)

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (5) für einen Rest der Formel (5a) 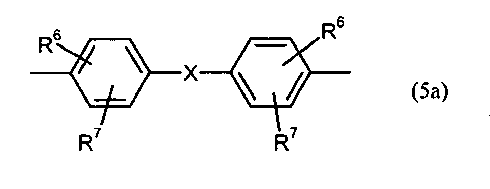 in der
- R⁶ und R⁷: unabhängig voneinander für H, C₁-C₁₈-Alkyl-, C₁-C₁₈-koxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-,
oder ein für einen Rest der Formel (5c) oder (5d) 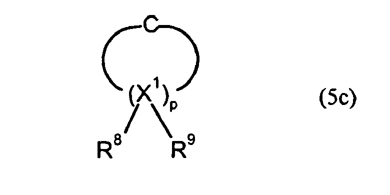 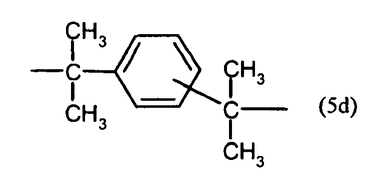 wobei
R⁸, R⁹, X¹ und p die oben angegebene Bedeutungen haben.

Beispiele für Diphenole sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kernhalogenierte Verbindungen.

Für die Herstellung der Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z. B. in den US-A 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der franzosischen Patentschrift 1 561 518, in der Monographie "H. Schnell, Chemistry and Physics of Polycarbonates, Interscience Publishers, New York 1964, S. 28ff; S.102ff', und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle der Copolycarbonate werden mehrere Diphenole eingesetzt, wobei selbstverständlich die verwendeten Bisphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die Diphenole können sowohl allein als auch im Gemisch miteinander verwendet werden; es sind sowohl Homopolycarbonate als auch Copolycarbonate einbezogen.

Die zur Regelung des Molekulargewichtes benötigten monofunktionellen erfindungsgemäßen Kettenabbrecher der Formel (2) können durch herkömmliche Kettenabbrecher bis zu 90 Mol-% ergänzt werden, wie z. B. durch Phenol oder Alkylphenole, insbesondere Phenol, p-tert.Butylphenol, iso-Octylphenol, Cumylphenol, deren Chlorkohlensäureester oder Säurechloride von Monocarbonsäuren bzw. Gemischen aus diesen Kettenabbrechern, und werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der verwendbaren Verbindungen mit drei oder mehr als drei phenolischen Hydroxylgruppen sind beispielsweise

Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die aromatischen Polycarbonate der vorliegenden Erfindung besitzen Gewichtsmittelmolekulargewichte M_{w} (ermittelt durch Gelpermeationschromatographie und Eichung mit Polycarbonateichung) zwischen 5.000 und 200.000, vorzugsweise zwischen 10.000 und 80.000 und besonders bevorzugt zwischen 15.000 und 40.000 (dies entspricht in etwa zwischen 12.000 und 330.000, vorzugsweise zwischen 20.000 und 135.000 und besonders bevorzugt zwischen 28.000 und 69.000 ermittelt durch Eichung mittels Polystyrolstandard)

Die relativen Lösungsviskositäten liegen entsprechend zwischen 1.10 und 1.60 gemessen in Methylenchlorid (0.5 g Polycarbonat in 100 ml Methylenchlorid bei 23°C).

Erfindungsgemäße Polyestercarbonate sind solche, die aus mindestens einem Diphenol, aus mindestens einer aromatischen Dicarbonsäure und aus Kohlensäure aufgebaut sind.

Geeignete aromatische Dicarbonsäuren sind beispielsweise Orthophthalsäure, Terephthalsäure, Isophthalsäure, *tert*.-Butylisophthalsäure, 3,3'-Diphenyldicarbonsäure, 4,4'-Diphenyletherdicarbonsäure, 4,4'-Diphenylsulfondicarbonsäure, 3,4'-Benzophenondicarbonsäure, 2,2-Bis-(4-carboxyphenyl)-propan, Trimethyl-3-phenylindan-4,5-dicarbonsäure.

Von den aromatischen Dicarbonsäuren werden besonders bevorzugt die Terephthalsäure und/oder Isophthalsäure eingesetzt.

Geeignete Diphenole sind die vorstehend für die Polycarbonatherstellung genannten. Die Kohlensäure kann entweder via Phosgen oder via Diphenylcarbonat in die Polyestercarbonate eingebaut werden, je nach Wahl des Herstellungsverfahrens, also je nachdem, ob Phasengrenzflächenpolykondensation oder Schmelzumesterung zur Polyestercarbonatherstellung verwendet wird. Entsprechendes gilt für die aromatischen Dicarbonsäuren; sie werden entweder als aromatische Dicarbonsäuredichloride im Zweiphasengrenzflächenverfahren oder als Dicarbonsäurediester im Schmelzumesterungsverfahren eingesetzt.

Die Herstellung der erfindungsgemäßen Polyestercarbonate erfolgt nach bekannten Herstellungsverfahren, also wie bereits erwähnt beispielsweise nach dem Phasengrenzflächenverfahren oder nach dem Schmelzumesterungsverfahren.

Die erfindungsgemäßen Polyestercarbonate können sowohl linear als auch in bekannter Weise verzweigt sein. Die aromatischen Polyestercarbonate der vorliegenden Erfindung haben mittlere Gewichtsmittel M_{w} (ermittelt durch Gelpermeationschromatographie mit Polystyroleichung) vorzugsweise zwischen 10.000 und 250.000, besonders bevorzugt 15.000 - 100.000 (g/mol).

Das molare Verhältnis von Carbonateinheiten zu aromatischen Dicarboxylateinheiten in den erfindungsgemäßen Polyestercarbonaten liegt vorzugsweise bei 95:5 bis 5:95, besonders bevorzugt bei 90:10 bis 10:90, insbesondere bevorzugt bei 80:20 bis 20:80 und ganz besonders bevorzugt bei 60:40 bis 40:60 vor.

Erfindungsgemäße aromatische Polyester sind solche aus mindestens einem Diphenol und mindestens einer aromatischen Dicarbonsäure.

Geeignete Diphenole und Dicarbonsäuren sind die vorstehend für die Polyestercarbonatherstellung genannten.

Die erfindungsgemäßen aromatischen Polyester werden nach bekannten Herstellungsverfahren (siehe z. B. Kunststoff-Handbuch, Bd. VIII, S. 695 ff, Carl-Hanser-Verlag, München, 1973) hergestellt.

Die erfindungsgemäßen aromatischen Polyester können sowohl linear als auch in bekannter Weise verzweigt sein.

Die erfindungsgemäßen aromatischen Polyester besitzen mittlere Gewichtsmittelmolekulargewichte M_{w} (ermittelt nach der Lichtstreuungsmethode), vorzugsweise zwischen 25.000 und 70.000.

Gegenstand der vorliegenden Erfindung ist somit auch ein Verfahren zur Herstellung der erfindungsgemäßen Polycarbonate, Polyestercarbonate oder Polyester aus Diphenolen, Monophenolen, Kohlensäurederivaten und/oder Dicarbonsäurederivaten nach an sich bekannten Verfahrensbedingungen, das dadurch gekennzeichnet ist, dass man als Kettenabbrecher Monophenole der Formel (2) in Mengen von 0.5 Mol-% bis 8 Mol-%, vorzugsweise von 2 Mol-% bis 6 Mol-%, bezogen jeweils auf Mole Diphenole, einsetzt, wobei davon bis zu 90 Mol-%, vorzugsweise bis zu 75 Mol-%, insbesondere bis zu 70 Mol-%, bezogen jeweils auf die Gesamtmenge an Kettenabbrecher, durch andere Monophenole ersetzt werden können.

Im Falle des Phasengrenzflächenpolykondensationsverfahrens können die Kettenabbrecher der Formel (2) vor, während oder nach der Phosgenierung in Lösung zugesetzt werden. Die für das Lösen der Kettenabbrecher der Formel (2) geeigneten Lösungsmittel sind beispielsweise Methylenchlorid, Chlorbenzol oder Acetonitril sowie Mischungen dieser Lösungsmittel.

Im Falle des Schmelzeumesterungsverfahren besteht nach dem erfindungsgemäßen Verfahren die Möglichkeit, die Kettenabbrecher der Formel (2) zu jedem Zeitpunkt der Reaktion zuzugeben; dabei kann die Zugabe in mehrere Portionen aufgeteilt werden

Diphenole zur Herstellung der erfindungsgemäßen Polycarbonate, Polyestercarbonate und Polyester können auch Polymerisate oder Kondensate mit phenolischen Endgruppen sein, so dass erfindungsgemäß auch Polycarbonate bzw. Polyestercarbonate bzw. Polyester mit Blockstrukturen einbezogen sind.

Die erfindungsgemäßen Polycarbonate, Polyestercarbonate und Polyester können in bekannter Weise aufgearbeitet und zu beliebigen Formkörper verarbeitet werden, beispielsweise durch Extrusion oder Spritzguss.

Den erfindungsgemäßen Polycarbonaten, Polyestercarbonaten und Polyestern können noch andere aromatische Polycarbonate und/oder andere aromatische Polyestercarbonate und/oder andere aromatische Polyester in bekannter Weise zugemischt werden.

Den erfindungsgemäßen Polycarbonaten, Polyestercarbonaten und Polyestern können noch die für diese Thermoplasten üblichen Additive wie Füllstoffe, W-Stabilisatoren, Thermostabilisatoren, Antistatika, Farbstoffe und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 - 25, und in "Plastics Additives", R. Gächter und H. Müller, Hanser Publishers 1983, beschrieben).

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:

Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide of β-(3,5-Di-tert-butyl-4-hydroxyphenyl)propionsäure, geeignete Thiosynergisten, sekundäre Antioxidantien, Phosphite und Phosphonite, Benzofuranone und Indolinone.

Bevorzugt sind organische Phosphite, Phosphonate und Phosphane, meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)benzotriazole, 2-Hydroxybenzophenone, Ester von substituierten und unsubstituierten Benzoesäuren, Acrylate, Sterisch gehinderte Amine, Oxamide sowie 2,8,2-(2-Hydroxyphenyl)-1,3,5-triazine, bevorzugt sind substituierte Benzotriazole wie z.B. 2-(2'-hydroxy-5'-methyl-phenyl)-benzotriazole, 2-(2'-hydroxy-3',5'-di-t-butyl-phenyl)benzotriazole, 2-(2'-hydroxy-3'-tert.-butyl-5'-methyl-phenyl)-5-chlorobenzotriazole, 2-(2'-hydroxy-3',5'-tert.-butyl-phenyl)-5-chlorobenzotriazole, 2-(2'-hydroxy-5'-tert.-octylphenyl)benzotriazole, 2-(2'-hydroxy-3',5'-di-tert.-amylphenyl)benzotriazole, 2-[2'-hydroxy-3'-(3",4",5",6"-tetrahydrophthalimido-ethyl)-5'-methylphenyl]-benzotriazole and 2,2'-methylenebis [4-(1,1,3,3-tetramethylbutyl)-6-(2H-benzotriazole-2-yl)phenol].

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Außerdem können Verarbeitungshilfsmittel wie Entformungsmittel, meist Derivate langkettiger Fettsäuren, zugesetzt werden. Bevorzugt sind z. B. Pentaerythrittetrastearat und Glycerinmonostearat. Sie werden allein oder im Gemisch vorzugsweise in einer Menge von 0,02 bis 1 Gew.-%, bezogen auf die Masse der Zusammensetzung eingesetzt.

Geeignete flammhemmende Additive sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

Die erfindungsgemäßen Polycarbonate, Polyestercarbonate und Polyester, gegebenenfalls in Abmischung mit anderen Thermoplasten und/oder üblichen Additiven können zu beliebigen Formteilen/Extrudaten verarbeitet überall dort eingesetzt werden, wo bereits bekannte Polycarbonate, Polyestercarbonate und Polyester eingesetzt werden. Aufgrund ihres Eigenschaftsprofils eignen sie sich als Substratmaterialien für Platten, Stegplatten, Verglasungen, Streuscheiben, Lampenabdeckungen oder optischer Datenspeicher, wie Audio-CD, CD-R(W), DVD, DVD-R(W) etc., sind aber auch beispielsweise als Folien im Elektrosektor als Formteile im Fahrzeugbau und als Platten für Abdeckungen im Sicherheitsbereich einsetzbar. Weitere mögliche Anwendungen der erfindungsgemäßen Polycarbonate sind:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-Patent 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildem.
7. Zur Herstellung von Schaumstoffen (siehe beispielsweise DE-B 1 031 507).
8. Zur Herstellung von Fäden und Drähten (siehe beispielsweise DE-B 1 137 167 und DE-A 1 785 137).
9. Als transluzente Kunststoffe mit einem Gehalt an Glasfasern für lichttechnische Zwecke (siehe beispielsweise DE-A 1 554 020).
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269 324) zur Herstellung von lichtdurchlässigen und lichtstreuenden Formteilen.
11. Zur Herstellung von Präzisionsspritzgussteilchen, wie beispielsweise Linsenhalterungen. Hierzu verwendet man Polycarbonate mit einem Gehalt an Glasfasern, die gegebenenfalls zusätzlich etwa 1 - 10 Gew.-% MoS₂, bezogen auf Gesamtgewicht, enthalten.
12. Zur Herstellung optischer Geräteteile, insbesondere Linsen für Foto- und Filmkameras (siehe beispielsweise DE-A 2 701 173).
13. Als Lichtübertragungsträger, insbesondere als Lichtleiterkabel (siehe beispielsweise EP-A 0 089 801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Nctwork interface devices
17. Als Trägermaterial für organische Fotoleiter.
18. Zur Herstellung von Leuchten, z. B. Scheinwerferlampen, als sogenannte "head-lamps", Streulichtscheiben oder innere Linsen.
19. Für medizinische Anwendungen, z. B. Oxygenatoren, Dialysatoren.
20. Für Lebensmittelanwendungen, wie z. B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger ggf. in Form geeigneter Blends mit ABS oder geeigneten Kautschuken.
22. Für Sportartikel, wie z. B. Slalomstangen oder Skischuhschnallen.
23. Für Haushaltsartikel, wie z. B. Küchenspülen und Briefkastengehäuse.
24. Für Gehäuse, wie z. B. Elektroverteilerschränke.
25. Gehäuse für Elektrozahnbürsten und Föngehäuse
26. Transparente Waschmaschinen - Bullaugen mit verbesserter Beständigkeit gegenüber der Waschlösung.
27. Schutzbrillen, optische Korrekturbrillen.
28. Lampenabdeckungen für Kücheneinrichtungen mit verbesserter Beständigkeit gegenüber Küchendunst insbesondere Öldämpfen.
29. Verpackungsfolien für Arzneimittel.
30. Chip-Boxen und Chip-Träger
31. Für sonstige Anwendungen, wie z. B. Stallmasttüren oder Tierkäfige.

Die Formkörper und Extrudate erhältlich aus den erfindungsgemäßen Polymeren sind ebenfalls Gegenstand dieser Anmeldung.

### Beispiele

### Beispiel 1 (Herstellung eines erfindungsgemäßen Kettenabbrechers)

### 1a) Herstellung des Tosylats einer Hydroxy-terminierten Alkylsiloxanverbindung

In einem Rundkolben werden 2,44 g (0,02 mol) 4-Dimethylaminopyridin, 11,13 g (0,11 mol) Triethylamin sowie 100 g (1 mol) Polydimethylsiloxan (MCR-C12; Monocarbinol-terminiert, Hersteller: ABCR GmbH&CoKg (D-76187 Karlsruhe, Im Schlehert 10, Deutschland); Molekulargewicht Mw = 1.000 g/mol; kinematische Viskosität 15 - 20 cSt)), in 300 ml Dichlormethan (wasserfrei) unter Argon vorgelegt. 18,11 g (0,0950 mol) Toluolsulfonsäurechlorid gelöst in 100 ml Dichlormethan werden bei Raumtemperatur hinzugetropft. Nach Beendigung der Zugabe wird das Reaktionsgemisch 6 Stunden unter Rückfluss erhitzt. Zur Aufarbeitung des Gemisches werden 250 ml Eiswasser und 400 ml Dichlormethan zugegeben. Dann wird das Reaktionsgemisch mit 10 %iger Salzsäure auf pH = 2 eingestellt. Es wird mehrmals mit Wasser gewaschen und abschließend mit gesättigter Kochsalzlösung gewaschen. Die organische Phase wird über Magnesiumsulfat getrocknet, eingeengt und über Kieselgel mit einem Eluentgemisch (n-Hexan/ Ethylacetat 1:1) filtriert. Die Lösung wird eingeengt und die Substanz im Hochvakuum getrocknet. Man erhält 96,7 g eines leicht trüben Öls.

### 1b) Umsetzung des Tosylats aus Beispiel 1a mit Hydrochinon zum Kettenabbrecher :

In einem Rundkolben werden unter Argon 15 g (0.138 mol) Hydrochinon und 6.3 g (0.11 mol) Kaliumhydroxid (gelöst in wenigen ml Wasser) in einem Gemisch aus 100 ml Methanol und 500 ml Ethanol vorgelegt. Man erwärmt auf 65°C und tropft innerhalb einer Stunde 80 g (0.07 mol) des gelben Öls aus Beispiel 1a hinzu. Man erwärmt für 5 Stunden unter Rückfluss.

Das Reaktionsgemisch wird mit 400 ml Dichlormethan und 600 ml Wasser verdünnt und die Phasen getrennt. Die wässrige Phase wird mehrmals mit je 200 ml Dichlormethan extrahiert. Die vereinigten organischen Phasen werden noch 3 mal mit je 200 ml Wasser, abschließend mit gesättigter Kochsalzlösung gewaschen und danach über Magnesiumsulfat getrocknet. Nach Einengen wird das Rohprodukt mit einem Eluentengemisch aus n-Hexan/ Ethylacetat (5:1) über Kieselgel filtriert. Man erhält 53 g eines gelben Öls. ¹H-NMR (400 MHz; CDCl₃): δ = 6.72 - 6,60 (m, 4 H); 4.00 - 3.95 (m, 2 H); 3.69 - 3.65 (m, 2H); 3.45- 3.38 (m, 2 H); 1.61 - 1.54 (m, 2H); 1.30 - 1.10 (m, 3 H); 0.82 - 0.78 (m, 1 H); 0.52- 0.45 (m,3 H); 0.1 - -0.1 (m (SiCH3)n). Die Signallagen und die Integration ist als beispielhaft zu betrachten, da es sich um ein Oligomerengemisch mit verschiedenen Molmassen handelt. MALDI-MS: Massenpeaks des Strukturelements C₁₇H₃₀O₃Si[C₂H₆OSi]ₙ. Das Produkt wird ohne weitere Fraktionierung eingesetzt.

### Beispiel 2

### Herstellung erfindungsgemäßes PC

In einem 11-Wellenbrecher-Kolben mit Metallrührer, 100 ml-Tropftrichter gefüllt mit 40 %iger Natronlauge und pH-Elektrode werden unter Einleiten von Stickstoff 45,6 g Bisphenol A (0,2 mol) in einer Lösung aus 35,2 g (0,88 mol) Natriumhydroxid in 740 ml VE-Wasser vorgelegt und 5 min gerührt. Nach Zugabe von 740 ml Dichlormethan wird weitere 5 min stark gerührt, Anschließend werden bei einer Temperatur von 20-25°C mit einer Geschwindigkeit von 2 g/min 39,3 g Phosgen eingeleitet. Das Abgas wird über einen A-Kohle-Waschturm abgeleitet. Der pH-Wert wird dabei durch Zugabe von 45%iger Natronlauge zwischen 12-13,5 gehalten werden.

Nach beendeter Einleitung wird für 5 min Stickstoff eingeleitet, die Rührgeschwindigkeit erhöht und 13,3 g des Produktes aus Beispiel 1 gelöst in 30 ml Dichlormethan zugegeben, nach weiteren 5 min werden 0,23 g (0,002 mol) Ethylpiperidin in 20 ml Dichlormethan gelöst zugegeben und weitere 45 min nachgerührt. Die Phasen werden getrennt, die organische Phase mit 500 ml Dichlormethan verdünnt, 1 x mit 15 %iger Phosphorsäure (Volumen org. Phase/H₃PO₄ 1:1) geschüttelt, anschließend mit VE-Wasser gewaschen, bis die Leitfähigkeit der wässrigen Phase <15 µS liegt. Die organische Phase wird mit MgSO₄ getrocknet und filtriert. Die Polycarbonat-Lösung wird mit Dichlormethan auf 3% verdünnt und mit der 3fachen Menge Methanol gefällt. Die Polymerfällung wird abgesaugt und bei 130°C im Vakuumtrockenschrank getrocknet. Man erhält 53 g eines feinen weißen Pulvers. Das Molekulargewicht des Materials beträgt M_{w} = 24.400 g/mol (Massenmittel bestimmt bei Raumtemperatur über Gelpermeationschromatographie kalibriert auf BPA-Polycarbonat mit Brechungsindexdetektor; entspricht in etwa 43.000 g/mol ermittelt mit Polystyroleichung).

### Messung des Dehnverhaltens von Beispiel 2

10 g des erfindungsgemäßen Polymers gemäß Beispiel 2 wurden in Methylenchlorid gelöst und die Lösung über ein Teflonfilter mit einer Porengröße von 5 µm filtriert. Die filtrierte Lösung wird eingeengt und die Schmelze bei 240°C und einem Druck von 50 bar mit einer Heißpresse (Modell PW20, Fa. Weber) zu einer Folie mit einer Dicke von 65 bis 75 Mikrometer verpresst.

Die so erhaltene Folie wird in Stücke von ca. 2,7 mm x 13 mm geschnitten. Diese werden in einer Zugapparatur (Fa. Kammrath und Weiss) in Klemmbacken eingespannt, die mit geeignetem Schleifpapier belegt sind. Die Einspannlänge beträgt 2,27 mm. Die Kraftverlängerungskurven werden mit einer Dehnrate von 0,21 min⁻¹ bei 23°C aufgenommen. Unter Berücksichtigung der Probengeometrie (Probendicke, Probenbreite und Einspannlänge) wird die Spannungs-Dehnungskurve berechnet. Aus der Spannungsdehnungskurve werden die Werte für die Bruchdehnung, Bruchspannung und Zug-E-Modul entnommen. Der Versuch wird bei 23°C durchgeführt.

### Beispiel A (Vergleich)

Es wird ein aromatisches Polycarbonat aus Bisphenol A mit tert.-Butylphenol als Endgruppe gewählt. Das Molekulargewicht beträgt M_{w} = 23.800 (Massenmittel bestimmt bei Raumtemperatur über Gelpermeationschromatographie kalibriert auf BPA-Polycarbonat mit Brechungsindexdetektor; entspricht in etwa 42.000 g/mol ermittelt mit Polystyroleichung).

### Messung des Dehnverhaltens von Beispiel A

Das Polycarbonat gemäß Beispiel A wird wie bei Beispiel 2 beschrieben in Methylenchlorid gelöst und über ein Teflonfilter filtriert. Die filtrierte Lösung wird eingeengt und die Schmelze bei 240°C und einem Druck von 50bar mit einer Heißpresse (Modell PW20, Fa. Weber) zu einer Folie mit einer Dicke von 152 bis 165 Mikrometer verpresst. Aus Präparationsgründen wurde bei dieser Polycarbonatprobe eine höhere Dicke gewählt. Trotz größerer Dicke ist die Bruchdehnung geringer im Vergleich zum erfindungsgemäßen Beispiel (siehe Tabelle 1). Yieldspannung und Zug-E-Modul sind unabhängig von der Probendicke.

Der Zugversuch wird wie in Beispiel 2 durchgeführt.

Es ergeben sich folgende Werte für die Versuche bei 23°C:

**Tabelle 1**

| **Beispiel** | **Bruchdehnung (%)** | **Yieldspannung (Mpa)** | **Zug-E-Modul (Mpa)** |
|---|---|---|---|
| A | 70 - 105 | 70 - 78 | 1860 - 2290 |
| 1 | 122 - 125 | 52 - 63 | 2000 - 2290 |

### Bestimmung des Brandverhaltens

Als eine übliche Methode zur Bestimmung des Brandverhaltens gilt der UL 94-V Test (Standard for tests for flammability of plastic materials for parts in devices and appliances - Edition 5 10/29/96, Underwriters Laboratories Inc. Die Proben werden dabei wie folgt vorbehandelt:
1.) 2 Tage / 23 °C / 50 % rel. Luftfeuchte
2.) 7 Tage / 70 °C / Warmluftofen

Die Beflammung erfolgt mittels 20 mm hoher Tirillbrennerflamme. Die Beflammungszeit beträgt 2 x 10 Sekunden. Die zweite Beflammungszeit beginnt, sobald die entzündete Probe verloschen ist; bei nicht entzündeter Probe sofort danach. Bestimmt werden die Nachbrennzeiten nach der Beflammung, die Summe aller Nachbrennzeiten und das Nachbrennen und Nachglühen der Proben nach der zweiten Beflammung. Des weiteren wird angegeben, ob die Probe brennend abtropft (Watte unterhalb der Probe entzündet sich).

### Beispiel 3 (erfindungsgemäß)

Zu einer mit Stickstoff inertisierten Lösung von 2169 g (9,5 mol) Bisphenol A und 1672 g (41,8 mol) Natriumhydroxid in 38 1 Wasser werden 38 1 Methylenchlorid hinzugegeben. Bei einem pH-Wert von 12.5 - 13.5 und 20 °C leitet man 1879 g (19 mol) Phosgen ein. Um den pH-Wert nicht unter 12,5 fallen zu lassen, wurde während der Phosgenierung 30 %-ige Natronlauge zugegeben. Nach beendeter Phosgenierung und Spülung mit Stickstoff gibt man 621 g (0.57 mol) Siloxanverbindung (hergestellt nach Beispiel 1) gelöst in 1 1 Methylenchlorid hinzu und lässt 15 Minuten Rühren. Anschließend werden 9 g Phenol (0,1 mol) gelöst in 1 1 Methylenchlorid hinzugegeben. Man rührt für weitere 15 Minuten und gibt 10,7 g (0.09 mol) N-Ethylpiperidin zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt bei 230 °C und 80 Umdrehungen/min bei 0.1 mbar über einen Ausdampfextruder extrudiert und über einen Granulator granuliert. Man erhält 1990 g eines transparenten Granulats. Das Molekulargewicht des Polycarbonatharzes beträgt Mw = 24.600 g/mol (Massenmittel bestimmt bei Raumtemperatur über Gelpermeationschromatographie kalibriert auf BPA-Polycarbonat mit Brechungsindexdetektor; entspricht in etwa 44.000 g/mol ermittelt mit Polystyroleichung).

Das Granulat wird 5 Stunden im Umlufttrockenschrank bei 120 °C getrocknet und auf einer Spritzgussmaschine bei 280 °C zu Prüfkörpern mit den Abmessungen 127,0 x 12,7 x 3,0 mm verarbeitet. Die Prüfstäbe werden dann einer Brennbarkeitsprüfung gemäß Vorschrift UL 94-V unterworfen.

**Tabelle 2: UL 94-V Test (Konditionierung: 2 Tage / 23 °C / 50 % rel. Luftfeuchte)**

| Prüfkörper | t1 [s] Nachbrennzeit 1. Beflammung | t 2 [s] Nachbrennzeit 2. Beflammung | t 2 + t3 (t3: Nachglühzeit) | Bewertung Prüfkörper |
|---|---|---|---|---|
| 1 | 2,1 | 7,8 | 8 | Tropft nicht |
| 2 | 4,9 | 22,7 | 22,9 | Tropft und entzündet die Watte |
| 3 | 3,9 | 11,2 | 11,4 | Tropft und entzündet die Watte |
| 4 | 6,8 | 3,1 | 3,3 | Tropft nicht |
| 5 | 4,3 | 5,7 | 5,9 | Tropft nicht |

| | | | | |
|---|---|---|---|---|
| Gesamtnachbrennzeit: (t1 + t2): 72,5 s | | | | |

**Tabelle 3: UL 94-V Test (Konditionierung: 7 Tage / 70 °C / Warmluftofen)**

| Prüfkörper | t1 [s] Nachbrennzeit 1. Beflammung | t 2 [s] Nachbrennzeit 2. Beflammung | t 2 + t3 (t3: Nachglühzeit) | Bewertung Prüfkörper |
|---|---|---|---|---|
| 1 | 5,4 | 5,5 | 5,7 | Tropft nicht |
| 2 | 1,7 | 4,7 | 4,9 | Tropft nicht |
| 3 | 2,4 | 6,7 | 6,9 | Tropft nicht |
| 4 | 2,5 | 4,8 | 5,0 | Tropft nicht |
| 5 | 3,2 | 7,8 | 8,0 | Tropft nicht |

| | | | | |
|---|---|---|---|---|
| Gesamtnachbrennzeit (t1 + t2): 44,7 s | | | | |

### Beispiel 4 (Vergleichsbeispiel)

Ein Polycarbonat aus Bisphenol A mit tert.-Butylphenol als Kettanbbrecher mit einem Molekulargewicht (Massenmittel) von Mw = 24.800 g/mol (Massenmittel bestimmt bei Raumtemperatur über Gelpermeationschromatographie kalibriert auf BPA-Polycarbonat mit Brechungsindexdetektor; entspricht in etwa 44.000 g/mol ermittelt mit Polystyroleichung) wird auf einer Spritzgussmaschine bei 280 °C zu Prüfkörpern mit den Abmessungen 127,0 x 12,7 x 3,0 mm verarbeitet. Die Prüfstäbe werden dann einer Brennbarkeitsprüfung gemäß Vorschrift UL 94-V unterworfen.

**Tabelle 4: UL 94-V Test (Konditionierung: 2 Tage / 23 °C / 50 % rel. Luftfeuchte)**

| Prüfkörper | t1 [s] Nachbrennzeit 1. Beflammung | t 2 [s] Nachbrennzeit 2. Beflammung | t 2 + t3 (t3: Nachglühzeit) | Bewertung Tropfverhalten des Prüfkörpers |
|---|---|---|---|---|
| 1 | 22 | 3,2 | 3,4 | Tropft und entzündet die Watte |
| 2 | 17,4 | 6,3 | 6,5 | Tropft und entzündet die Watte |
| 3 | 30,8 | 2,0 | 2,2 | Tropft und entzündet die Watte |
| 4 | 1,7 | 9,8 | 10,0 | Tropft und entzündet die Watte |
| 5 | 29,3 | 16,6 | 16,8 | Tropft und entzündet die Watte |

| | | | | |
|---|---|---|---|---|
| Gesamtnachbrennzeit (t1 + t2): 139,1 s | | | | |

**Tabelle 5: UL 94-V Test (Konditionierung: 7 Tage / 70 °C / Warmluftofen)**

| Prüfkörper | t1 [s] Nachbrennzeit 1. Beflammung | t 2 [s] Nachbrennzeit 2. Beflammung | t 2 + t3 (t3: Nachglühzeit) | Bewertung Prüfkörper |
|---|---|---|---|---|
| 1 | >35,1 | - | - | Tropft nicht |
| 2 | 25,8 | 4,8 | 5,0 | Tropft und entzündet die Watte |
| 3 | >35,1 | - | - | Tropft nicht |
| 4 | 30,9 | 5,4 | 5,6 | Tropft und entzündet die Watte |
| 5 | 27,5 | 29,4 | 29,6 | Tropft und entzündet die Watte |

| | | | | |
|---|---|---|---|---|
| Gesamtnachbrennzeit (t1 + t2): >194 s | | | | |

Es ist deutlich erkennbar, dass das erfindungsgemäße Polycarbonat deutlich kleinere Nachbrennzeiten und ein verbessertes Tropfverhalten aufweist (tropft weniger leicht brennend ab). Die relativ geringen Nachbrennzeiten in der Spalte "Nachbrennzeit 2. Beflammung" in den Tabellen 4 und 5 (Vergleichsbeispiel) erklären sich durch das fast vollständige Abbrennen bzw. das vollständige Abtropfen der Probe während der ersten Beflammung.

## Patentansprüche

1. Polycarbonate, Polyestercarbonate und Polyester enthaltend eine phenolische Struktur der Formel (1) als Endgruppe 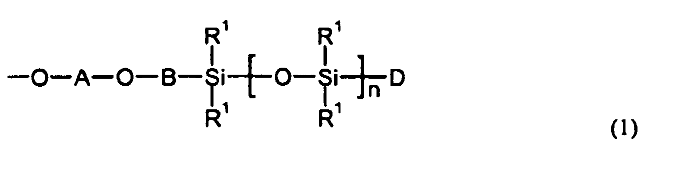 wobei
A für einen gegebenenfalls substituierten Arylrest steht,
B für C₁-C₁₂- Alkyl oder C₁-C₁₂-Alkoxyalkyl steht,
R¹ für C₁-C₁₂-Alkyl oder C₆-C₁₂-Aryl,
D für C₁-C₁₂-Alkyl- oder C₆-C₁₂₋Aryl und
n für eine Zahl (Mittelwert) von 0 - 300 steht.

2. Polycarbonate, Polyestercarbonate und Polyester gemäß Anspruch 1 enthaltend eine phenolische Struktur der Formel (1) als Endgruppe, wobei A für 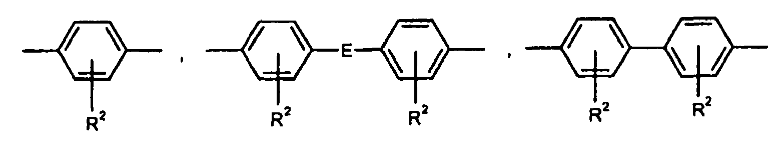 steht,
R² unabhängig für Wasserstoff, C₁-C₁₈-Alkyl, C₁-C₁₈-Alkoxy, Cl, Br oder für einen gegebenenfalls substituierten Aryl- oder Aralkylrest,
E für eine Einfachbindung, -SO₂-, -CO-, -O-, -S-, C₁- bis C₆-Alkylen, C₂- bis C₅- Alkyliden oder C₅- bis C₆- Cycloalkyliden, welches mit C₁- bis C₆-Alkyl, substituiert sein kann, ferner für C₆- bis C₁₂-Arylen, welches gegebenenfalls mit weiteren Heteroatome ent- haltenden aromatischen Ringen kondensiert sein kann, steht, und
B für C₁-C₁₂-Alkyl oder C₁-C₁₂-Alkoxyalk-yl steht.

3. Polycarbonate, Polyestercarbonate und Polyester gemäß Anspruch 2 enthaltend eine phenolische Struktur der Formel (I), wobei
E für eine Einfachbindung, C₁ bis C₅-Alkylen, C₂ bis C₅-Alkyliden, C₅ bis C₆-Cycloalkyliden, -O-, -SO-, -CO-, -S- oder -SO₂-,
oder ein für einen Rest der Formel (1a) oder (1b) 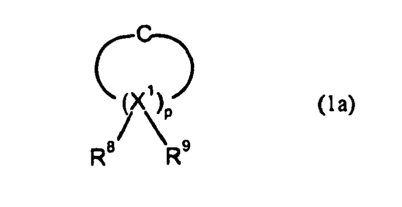 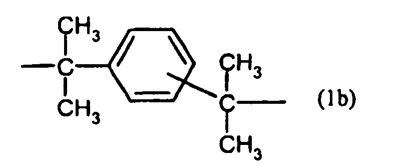 steht, wobei
R⁸ und R⁹ für jedes X¹ individuell wählbar, unabhängig voneinander Wasserstoff oder C₁ bis C₆-Alkyl, bedeuten und
X¹ Kohlenstoff und
p eine ganze Zahl von 4 bis 7 bedeuten, mit der Maßgabe, dass an mindestens einem Atom X¹, R⁸ und R⁹ gleichzeitig Alkyl sind und
B für C₁-C₆-Aklyl oder C₁-C₆-Allcyloxy-C₁-C₆-alkyl steht.

4. Polycarbonate, Polyestercarbonate und Polyester gemäß Anspruch 1 bis 3 enthaltend eine phenolische Struktur der Formel (1),
wobei
O-A-O abgeleitet ist von Hydrochinon, 4,4'-Dihydroxydiphenyl, 1,1-Bis-(4-hydroxyphe- nyl)-phenyl-ethan, 2,2-Bis-(4-hydroxyphenyl)-propan, 2,2-Bis(3,5-dimethyl-4- hydroxyphenyl)-propan, 1, 1 -Bis-(4-hydroxyphenyl)-cyclohexan und 1,1-Bis-(4- hydroxyphenyl)-3,3,5-trimethylcyclohexan (Bisphenol TMC),
B für Ethyl, Propyl, Butyl, Propyloxypropyl, Butyloxypropyl, Propyloxyethyl, Ethyloxyethyl oder Ethyloxypropyl steht,
R¹ für Methyl oder Phenyl steht,
D für Methyl, Ethyl, n- oder iso-Propyl steht und
n für eine Zahl (Mittelwert) von 10 - 100 steht.

5. Polycarbonate, Polyestercarbonate und Polyester gemäß Anspruch 4 enthaltend eine phenolische Struktur der Formel (1), wobei O-A-O abgeleitet ist von Hydrochinon, Bisphenol A und Bisphenol TMC.

6. Polycarbonate, Polyestercarbonate und Polyester gemäß Anspruch 5 enthaltend eine phenolische Struktur der Formel (1), wobei O-A-O abgeleitet ist von Hydrochinon.

7. Polycarbonate, Polyestercarbonate und Polyester gemäß Anspruch 1, enthaltend 0,5 bis 8 Mol-% phenolische Strukturen der Formel (1).

8. Polycarbonate, Polyestercarbonate und Polyester gemäß Anspruch 7, enthaltend 2 bis 6 Mol% phenolische Strukturen der Formel (1).

9. Polycarbonate, Polyestercarbonate und Polyester gemäß Anspruch 1, wobei die Polycarbonate Gewichtsmittelmolekulargewichte zwischen 5.000 und 200.000, die Polyestercarbonate zwischen 10.000 und 250.000 und die Polyester zwischen 25.000 und 70.000 aufweisen.

10. Polycarbonate, Polyestercarbonate und Polyester gemäß Anspruch 9, wobei die Polycarbonate Gewichtsmittelmolekulargewichte zwischen 10.000 und 80.000 aufweisen.

11. Polycarbonate, Polyestercarbonate und Polyester gemäß Anspruch 1, enthaltend Additive ausgewählt aus einem oder mehreren aus der Gruppe der UV-Stabitisatoren, Thermostabilisatoren, Antistatika, Pigmente, Farbstoffe, Entformungsmittel, Fließhilfsmittel, Flammschutzmitel, Füllstoffe und Schlagzähmodifikatoren.

12. Verwendung von Polycarbonaten, Polyestercarbonaten und Polyestern gemäß Anspruch 1 zur Herstellung von Formteilen.

13. Formteile erhältlich aus Polycarbonaten, Polyestercarbonaten und Polyestern gemäß Anspruch 1.

14. Verfahren zur Herstellung von Polycarbonaten, Polyestercarbonaten und Polyestern gemäß Anspruch 1 nach bekannten Verfahren, **dadurch gekennzeichnet, dass** als Kettenabbrecher phenolische Verbindungen der Formel (2) eingesetzt werden 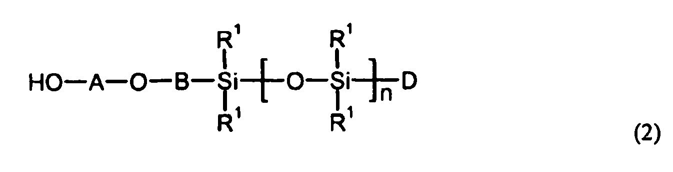 wobei A, B, R¹, D und n die in Anspruch 1 angegebene Bedeutung haben.

15. Verwendung der phenolischen Verbindungen der Formel (2) als Kettenabbrecher bei der Herstellung von Polymeren wie Polycarbonat, Polyestercarbonat und Polyester 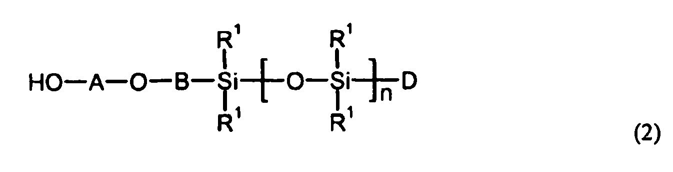 wobei A, B, R¹, D und n die in Anspruch 1 angegebene Bedeutung haben.

## Claims

1. Polycarbonates, polyester carbonates and polyesters comprising a phenolic structure of the formula (1) as terminal group 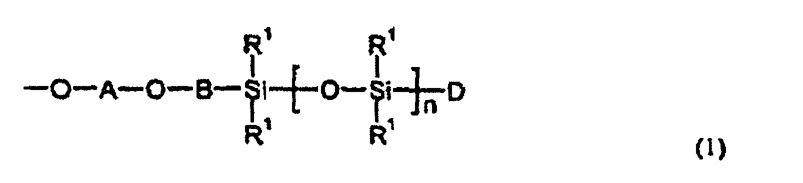 where
A is an optionally substituted aryl moiety,
B is C₁-C₁₂-alkyl or C₁-C₁₂-alkoxyalkyl,
R¹ is C₁-C₁₂-alkyl or C₆-C₁₂-aryl,
D is C₁-C₁₂-alkyl or C₆-C₁₂-aryl and
n is a number (average) from 0 to 300.

2. Polycarbonates, polyester carbonates and polyesters according to Claim 1 comprising a phenolic structure of the formula (1) as terminal group, where A is 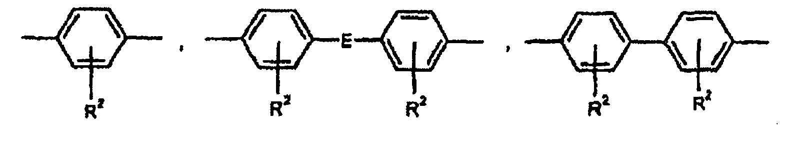 where
R² is independently hydrogen, C₁-C₁₈-alkyl, C₁-C₁₈-alkoxy, Cl, Br or an optionally substituted aryl or aralkyl moiety,
E is a single bond, -SO₂-, -CO-, -O-, -S-, C₁- to C₆-alkylene, C₂- to C₅-alkylidene or C₅- to C₆-cycloalkylidene, where this may be substituted by C₁- to C₆-alkyl, or else is C₆- to C₁₂-arylene, where this may optionally be condensed with further aromatic rings comprising heteroatoms, and
B is C₁-C₁₂-alkyl or C₁-C₁₂-alkoxyalkyl.

3. Polycarbonates, polyester carbonates and polyesters according to Claim 2 comprising a phenolic structure of the formula (1), where
E is a single bond, C₁ to C₅-alkylene, C₂ to C₅-alkylidene, C₅ to C₆-cycloalkylidene, -O-, -SO-, -CO-, -S- or -SO₂-,
or is a moiety of the formula (1a) or (1b), 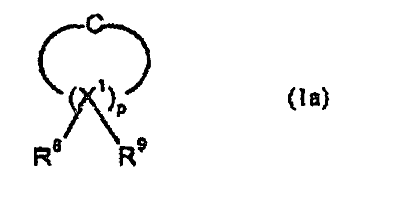 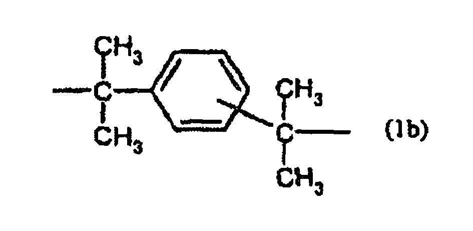 where
R⁸ and R⁹, individually selectable for each X¹, are independently of one another hydrogen or C₁ to C₆-alkyl, and
X¹ is carbon and
P is an integer from 4 to 7, with the proviso that R⁸ and R⁹ are simultaneously alkyl on at least one X¹ atom and
B is C₁-C₆-alkyl or C₁-C₆-alkyloxy-C₁-C₆-alkyl.

4. Polycarbonates, polyester carbonates and polyesters according to any of Claims 1 to 3 comprising a phenolic structure of the formula (1),
where
O-A-O derives from hydroquinone, 4,4'-dihydroxy- biphenyl, 1,1-bis(4-hydroxyphenyl)phenyl- ethane, 2,2-bis(4-hydroxyphenyl)propane, 2,2-bis(3,5-dimethyl-4-hydroxyphenyl)- propane, 1,1-bis(4-hydroxyphenyl)cyclo- hexane and 1,1-bis(4-hydroxyphenyl)-3,3,5- trimethylcyclohexane (bisphenol TMC),
B is ethyl, propyl, butyl, propyloxypropyl, butyloxypropyl, propyloxyethyl, ethyloxy- ethyl or ethyloxypropyl,
R¹ is methyl or phenyl,
D is methyl, ethyl, or n- or isopropyl and
n is an integer (average) from 10 to 100.

5. Polycarbonates, polyester carbonates and polyesters according to Claim 4 comprising a phenolic structure of the formula (1), where O-A-O derives from hydroquinone, bisphenol A and bisphenol TMC.

6. Polycarbonates, polyester carbonates and polyesters according to Claim 5 comprising a phenolic structure of the formula (1), where O-A-O derives from hydroquinone.

7. Polycarbonates, polyester carbonates and polyesters according to Claim 1, comprising from 0.5 to 8 mol% of phenolic structures of the formula (1).

8. Polycarbonates, polyester carbonates and polyesters according to Claim 7, comprising from 2 to 6 mol% of phenolic structures of the formula (1).

9. Polycarbonates, polyester carbonates and polyesters according to Claim 1, where the weight-average molecular weights of the polycarbonates are from 5000 to 200 000, of the polyester carbonates are from 10 000 to 250 000 and of the polyesters are from 25 000 to 70 000.

10. Polycarbonates, polyester carbonates and polyesters according to Claim 9, where the weight-average molecular weights of the polycarbonates are from 10 000 to 80 000.

11. Polycarbonates, polyester carbonates and polyesters according to Claim 1, comprising additives selected from one or more of the group of UV stabilizers, heat stabilizers, antistatic agents, pigments, dyes, mould-release agents, flow aids, flame retardants, fillers and impact modifiers.

12. Use of polycarbonates, polyester carbonates and polyesters according to Claim 1 for producing mouldings.

13. Mouldings obtainable from polycarbonates, polyester carbonates and polyesters according to Claim 1.

14. Process for producing polycarbonates, polyester carbonates and polyesters according to Claim 1 by known methods, **characterized in that** the chain terminators used comprise phenolic compounds of the formula (2), 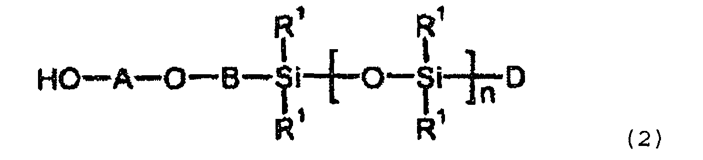 where A, B, R¹, D and n are defined as in Claim 1.

15. Use of the phenolic compounds of the formula (2) as chain terminators in the production of polymers such as polycarbonate, polyester carbonate and polyester. 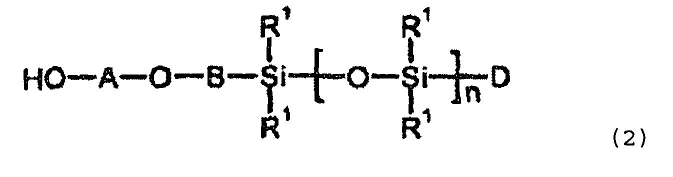 where A, B, R¹, D and n are defined as in Claim 1.

## Revendications

1. Polycarbonates, polyestercarbonates et polyesters contenant une structure phénolique de formule (1) comme groupe terminal 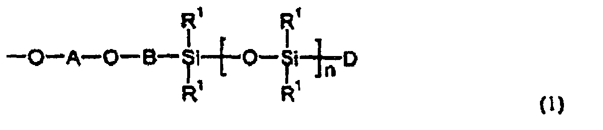 où
A représente un radical aryle le cas échéant substitué,
B représente C₁-C₁₂-alkyle ou C₁-C₁₂-alcoxyalkyle,
R¹ représente C₁-C₁₂-alkyle ou C₆-C₁₂-aryle,
D représente C₁-C₁₂-alkyle ou C₆-C₁₂-aryle et
n est un nombre (valeur moyenne) de 0 à 300.

2. Polycarbonates, polyestercarbonates et polyesters selon la revendication 1 contenant une structure phénolique de formule (1) comme groupe terminal, où A représente 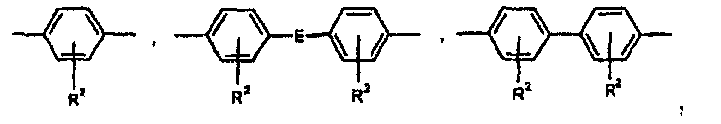
R² représente, indépendamment, hydrogène, C₁-C₁₈- alkyle, C₁-C₁₈-alcoxy, Cl, Br ou un radical aryle ou aralkyle le cas échéant substitué,
E représente une simple liaison, -SO₂-, -CO-, -O-, -S-, C₁-C₆-alkylène, C₂-C₅-alkylidène ou C₅-C₆- cycloalkylidène, qui peut être substitué par C₁-C₆- alkyle, en outre C₆-C₁₂-arylène, qui peut le cas échéant être condensé avec d'autres cycles aromatiques contenant des hétéroatomes, et
B représente C₁-C₁₂-alkyle ou C₁-C₁₂-alcoxyalkyle.

3. Polycarbonates, polyestercarbonates et polyesters selon la revendication 2 contenant une structure phénolique de formule (1) où
E représente une simple liaison, C₁-C₅-alkylène, C₂-C₅-alkylidène, C₅-C₆-cycloalkylidène, -O-, -SO-, -CO-, -S- ou -SO₂-,
ou un radical de formule (Ia) ou (Ib) 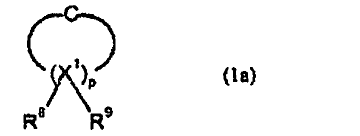 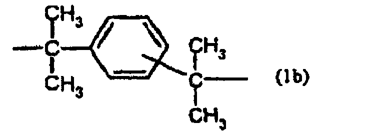 où
R⁸ et R⁹ signifient, en pouvant être choisis individuellement pour chaque X¹, indépendamment l'un de l'autre, hydrogène ou C₁-C₆-alkyle et
X¹ signifie carbone et
p est un nombre entier de 4 à 7, à condition que sur au moins un atome X¹, R⁸ et R⁹ représentent simultanément alkyle et
B représente C₁-C₆-alkyle ou C₁-C₆-alkyloxy-C₁-C₆- alkyle.

4. Polycarbonates, polyestercarbonates et polyesters selon la revendication 1 à 3 contenant une structure phénolique de formule (1) où
O-A-O est dérivé d'hydroquinone, de 4,4'- dihydroxydiphényle, de 1,1-bis-(4-hydroxyphényl)- phényléthane, de 2,2-bis-(4-hydroxyphényl)- propane, de 2,2-bis(3,5-diméthyl-4-hydroxyphényl)- propane, de 1,1-bis-(4-hydroxyphényl)-cyclohexane et de 1,1-bis-(4-hydroxyphényl)-3,3,5- triméthylcyclohexane (bisphénol TMC),
B représente éthyle, propyle, butyle, propyloxypropyle, butyloxypropyle, propyloxyéthyle, éthyloxyéthyle ou éthyloxypropyle,
R¹ représente méthyle ou phényle,
D représente méthyle, éthyle, n-propyle ou iso- propyle et
n est un nombre (valeur moyenne) de 10 à 100.

5. Polycarbonates, polyestercarbonates et polyesters selon la revendication 4 contenant une structure phénolique de formule (1) où O-A-O est dérivé d'hydroquinone, de bisphénol A et de bisphénol TMC.

6. Polycarbonates, polyestercarbonates et polyesters selon la revendication 5 contenant une structure phénolique de formule (1) où O-A-O est dérivé d'hydroquinone.

7. Polycarbonates, polyestercarbonates et polyesters selon la revendication 1, contenant 0,5 à 8% en mole de structures phénoliques de formule (1).

8. Polycarbonates, polyestercarbonates et polyesters selon la revendication 7, contenant 2 à 6% en mole de structures phénoliques de formule (1).

9. Polycarbonates, polyestercarbonates et polyesters selon la revendication 1, où les polycarbonates présentent des poids moléculaires pondéraux moyens entre 5000 et 200 000, les polyestercarbonates entre 10 000 et 250 000 et les polyesters entre 25 000 et 70 000.

10. Polycarbonates, polyestercarbonates et polyesters selon la revendication 9, où les polycarbonates présentent des poids moléculaires pondéraux moyens entre 10 000 et 80 000.

11. Polycarbonates, polyestercarbonates et polyesters selon la revendication 1, contenant des additifs choisis parmi un ou plusieurs du groupe formé par les stabilisateurs des UV, les thermostabilisateurs, les agents antistatiques, les pigments, les colorants, les agents de démoulage, les adjuvants d'écoulement, les agents ignifuges, les charges et les agents de modification de la résilience.

12. Utilisation de polycarbonates, de polyestercarbonates et de polyesters selon la revendication 1 pour la fabrication de pièces façonnées.

13. Pièces façonnées pouvant être obtenues à partir de polycarbonates, de polyestercarbonates et de polyesters selon la revendication 1.

14. Procédé pour la préparation de polycarbonates, de polyestercarbonates et de polyesters selon la revendication 1 selon des procédés connus, **caractérisé en ce qu'**on utilise comme agents d'interruption de chaîne des composés phénoliques de formule générale (2), 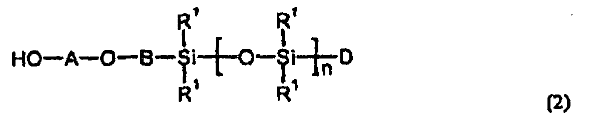 où A, B, R¹, D et n ont la signification indiquée dans la revendication 1.

15. Utilisation de composés phénoliques de formule (2) comme agent d'interruption de chaîne lors de la préparation de polymères, tels que le polycarbonate, le polyestercarbonate et le polyester 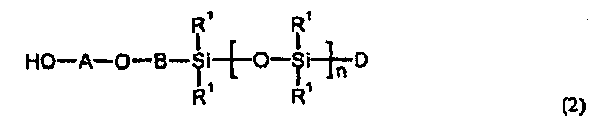 où A, B, R¹, D et n ont la signification indiquée dans la revendication 1.
